# EUROPÄISCHE PATENTSCHRIFT

(11) **EP 3 697 642 B1**
(45) Veröffentlichungstag und Bekanntmachung des Hinweises auf die Patenterteilung: **22.06.2022**
(21) Anmeldenummer: 18789762.4
(22) Anmeldetag: 16.10.2018
(51) Int. Cl.: B60N 2/28, B60N 2/90

(54) **BABYSCHALENVORRICHTUNG**
BABY CARRIER DEVICE
DISPOSITIF DE COQUE BÉBÉ

(30) Priorität: 16.10.2017 DE 102017124012
(43) Veröffentlichungstag der Anmeldung: 26.08.2020
(73) Patentinhaber: RECARO Kids S.r.l., 35131 Padova (IT)
(72) Erfinder: BAUER, Christine, 73734 Esslingen (DE); GRUPP, Thomas, 70619 Stuttgart (DE); WERNER, Felix, 95197 Schauenstein (DE)
(74) Vertreter: Perani & Partners S.p.A.
(86) Internationale Anmeldenummer: PCT/EP2018/078248
(87) Internationale Veröffentlichungsnummer: WO 2019/076895

(56) Entgegenhaltungen:
- EP-A1- 2 708 407
- EP-A2- 1 717 095
- US-A- 4 500 136

## Beschreibung

### Stand der Technik

Die Erfindung betrifft eine Babyschalenvorrichtung.

Es sind bereits Babyschalenvorrichtungen mit einer Babyschale, die zur Anbindung in einem Grundmodul vorgesehen ist und zumindest einen zwischen zwei Stellungen verstellbaren Tragebügel aufweist, vorgeschlagen worden.

Aus der EP 1 717 095 A2 ist ein Kindersicherheitssitz bekannt, der zwei Sitzteile umfasst, vorzugsweise einen Sitzteil und einen Rückenteil, welche miteinander verbunden sind, sowie einen einstellbaren Tragegriff, der mit dem Sicherheitssitz verbunden ist. Der Tragegriff kann zwischen verschiedenen Positionen relativ zum Sicherheitssitz bewegt werden. Die Bewegung des Tragegriffs zwischen den verschiedenen Positionen führt zu einem Neupositionieren, vorzugsweise zu einer Winkelveränderung von mindestens einem der Sitzteile.

Die EP 2 708 407 A1 beschreibt einen Kindersitz mit einem Sitzflächenteil und einem Lehnenteil sowie einer an dem Lehnenteil angeordneten Kopfstütze, die eine erste und eine zweite seitliche Stützwange aufweist, welche Stützwangen sich in im Wesentlichen horizontaler Richtung in einem Abstand gegenüberliegen und über eine Abstandseinstelleinrichtung in dem Abstand zueinander verstellbar und in zumindest zwei Einstellpositionen mit jeweils unterschiedlichem Abstand zueinander relativ zu dem Lehnenteil festlegbar sind, wobei die Abstandseinstelleinrichtung ein Getriebe umfasst mit dem eine flexible Einstellung des entlang einer horizontalen Richtung genommenen Abstandes zwischen den Stützwangen der Kopfstütze möglich ist, wobei diese Einstellmöglichkeit insbesondere bei in dem Kindersitz sitzenden Kind möglich ist, um eine entsprechende Anpassung besonders genau vornehmen zu können.

Das US-Patent US 4,500,136 A offenbart einen Fahrzeugsitz mit einem Rückenlehnenteil und einem Sitzteil, von denen jeder Teil ein Paar verstellbare Polsterabschnitte umfasst, welche an gegenüberliegenden Seiten von dessen Rahmen montiert sind. Ein von Hand betätigbarer Einstellmechanismus für jedes Paar bewegt selektiv und simultan die entsprechenden Polsterabschnitte zwischen ersten und zweiten lateralen Stützpositionen, und der Einstellmechanismus hält die Polsterabschnitte sowohl in der ersten als auch in der zweiten lateralen Stützposition.

Die Aufgabe der Erfindung besteht insbesondere darin, eine gattungsgemäße Vorrichtung mit verbesserten Eigenschaften hinsichtlich eines Komforts und einer Sicherheit bereitzustellen. Die Aufgabe wird erfindungsgemäß durch die Merkmale des
Patentanspruchs 1 gelöst, während vorteilhafte Ausgestaltungen und Weiterbildungen der Erfindung den Unteransprüchen entnommen werden können.

### Vorteile der Erfindung

Erfindungsgemäß wird eine Babyschalenvorrichtung mit einer Babyschale, die zur Anbindung in einem Grundmodul vorgesehen ist, zumindest einen zwischen zwei Stellungen verstellbaren Tragebügel aufweist und zumindest zwischen einer Anbindungskonfiguration und einer Komfortkonfiguration verstellbar ist, vorgeschlagen. Unter einer "Babyschalenvorrichtung" soll dabei insbesondere eine Vorrichtung verstanden werden, die zumindest einen Teil eines Systems aus einer Babyschale und einem Grundmodul ausbildet, mit dem die Babyschale zum Transport in einem Kraftfahrzeug fest verbindbar ist. Unter einer "Babyschale" soll dabei insbesondere eine Transportschale für ein Kleinkind verstanden werden, in der ein Kleinkind von der Geburt bis zum Alter von 15 Monaten und/oder mit einem Gewicht von bis zu 13 kg, insbesondere in einem Kraftfahrzeug, sicher und kleinkindgerecht befördert werden kann, wobei das in der Babyschale transportierte Kleinkind im Wesentlichen liegend in der Kinderschale transportiert wird. Dabei ist die Babyschale insbesondere dazu vorgesehen, dass unterschiedlich alte und große Babys in unterschiedlichen Liegepositionen in der Babyschale transportiert werden können. Grundsätzlich ist es ebenfalls denkbar, dass die Kinderschale zum Transport eines Kleinkinds außerhalb eines Kraftfahrzeugs vorgesehen ist; so ist es beispielsweise denkbar, dass die Kinderschale über ein Koppelmodul mit einem Kinderwagengrundgestell verbindbar ist, um so zusammen mit diesem einen Kinderwagen auszubilden. Unter einem "Grundmodul" soll dabei insbesondere ein Modul verstanden werden, das dazu vorgesehen ist, fest in einem Kraftfahrzeug, insbesondere auf einem Kraftfahrzeugsitz, angebracht zu werden und einen Anbindungsbereich für zumindest die Babyschale aufweist, über den die Babyschale fest und sicher mit dem Grundmodul verbindbar ist. Das Grundmodul ist dazu vorgesehen, die Babyschale sicher in dem Kraftfahrzeug zu sichern. Das Grundmodul ist als eine Sitzbasis ausgebildet. Das Grundmodul umfasst vorzugsweise einen starren Grundkörper, einen Abstützfuß, der an einem vorderen Ende des Grundkörpers angeordnet und dazu vorgesehen ist, sich in einem ausgefahrenen Zustand an einem Fußbereich des Kraftfahrzeugs abzustützen, und/oder wenigstens zwei als ISOFIX-Konnektoren ausgebildete Formschlusselemente zur Anordnung an eine tragende Struktur eines Kraftfahrzeugsitzes. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einem "Tragebügel" soll dabei insbesondere ein Element, insbesondere ein Tragelement, verstanden werden, das dazu vorgesehen ist, dass die Babyschale an diesem getragen werden kann. Dabei weist der Tragebügel einen im Wesentlichen U-förmigen Verlauf auf. Der Tragebügel ist mit einem ersten Ende an einer ersten, linken Seite der Babyschale und mit einem zweiten Ende an einer gegenüberliegenden zweiten, rechten Seite der Babyschale angeordnet. Der Tragebügel ist dabei als ein steifes Element ausgebildet. Der Tragebügel ist mit einem Grundkörper der Babyschale, der eine tragende Struktur der Babyschale ausbildet, verbunden. Der Tragebügel ist dabei bewegbar mit der Babyschale verbunden. Der Tragebügel ist relativ zu der Babyschale verstellbar. Der Tragebügel kann dabei insbesondere zwischen zumindest zwei Stellungen relativ zu dem Grundkörper der Babyschale verstellt werden. Vorzugsweise ist der Tragebügel in den zumindest zwei Stellungen, die insbesondere Maximalstellungen ausbilden, sowie in wenigstens einer weiteren Stellung, die zwischen den beiden Maximalstellungen liegt, arretierbar. Der Tragebügel ist dabei jeweils über ein Drehlager an seinen beiden Enden verschwenkbar mit dem Grundkörper der Babyschale angebunden. Der Tragebügel kann zwischen einer Tragestellung und einer Freigabestellung verstellt werden. Der Tragebügel ist in der Tragestellung und in der Freigabestellung arretierbar. Grundsätzlich ist es auch denkbar, dass der Tragebügel zwischen der Tragestellung und der Freigabestellung stufenlos arretierbar ist. In einer Tragestellung ist der Tragebügel im Wesentlichen oberhalb der Babyschale angeordnet und überspannt die Babyschale, sodass er insbesondere zum Tragen der Babyschale leicht ergreifbar ist. In der Tragestellung erstreckt sich der Tragebügel von dem Grundkörper der Babyschale im Wesentlichen senkrecht nach oben weg, wobei ein Haltebereich des Tragebügels oberhalb der Babyschale angeordnet ist. In der Freigabestellung ist der Tragebügel mit seinem Haltebereich hinter einen Kopfbereich der Babyschale verschwenkt. In der Freigabestellung erstreckt sich der Tragebügel von dem Grundkörper im Wesentlichen parallel zu einer Unterseite des Grundkörpers oder leicht nach unten geneigt nach hinten, wobei der Haltebereich hinter dem Grundkörper der Babyschale angeordnet ist. In der Freigabestellung ist es denkbar, dass die Babyschale so auf einem Boden abgestellt werden kann, dass der Tragebügel dazu vorgesehen ist, die Babyschale an dem Boden abzustützen. Unter einer "Anbindungskonfiguration" soll dabei insbesondere eine Konfiguration der Babyschale verstanden werden, in der die Babyschale über das Grundmodul in dem Kraftfahrzeug zu einem sicheren Transport in dem Kraftfahrzeug anbringbar ist. Dabei ist die Babyschale vorzugsweise lediglich in der Anbindungskonfiguration mit dem Grundmodul verbindbar. Die Anbindungskonfiguration ist insbesondere als eine Konfiguration der Babyschale ausgebildet, die die größtmögliche Sicherheit für ein in der Babyschale angeordnetes Kind bereitstellt. Ist die Babyschale nicht in ihrer Anbindungskonfiguration konfiguriert, ist die Babyschale nicht mit dem Grundmodul verbindbar. Unter einer "Komfortkonfiguration" soll dabei insbesondere eine Konfiguration der Babyschale verstanden werden, in der die Babyschale in einem Zustand, in dem sie von dem Grundmodul getrennt ist, einen möglichst großen Komfort für ein in der Babyschale angeordnetes Kind bereitstellt. In der Komfortkonfiguration ist eine Liegefläche, die dem Kind zur Verfügung steht, um wenigstens 5 cm breiter als in der Anbindungskonfiguration. In der Komfortkonfiguration ist die Babyschale nicht mit dem Grundmodul verbindbar. Dadurch kann eine besonders vorteilhafte Babyschale bereitgestellt werden, die bei hohem Komfort insbesondere auch eine hohe Sicherheit für ein Kind gewährleistet.

Weiter wird vorgeschlagen, dass die Babyschale zumindest einen Seitenflügel aufweist, der von einer Anbindungskonfiguration in eine Komfortkonfiguration bewegbar ist. Unter einem "Seitenflügel" soll dabei insbesondere ein Element verstanden werden, das die Babyschale zumindest teilweise seitlich begrenzt. Der Seitenflügel bildet dabei eine Seitenabstützung der Babyschale aus. Dabei erstreckt sich der Seitenflügel von einem von dem Grundkörper ausgebildeten Rückenlehnenbereich der Babyschale weg. Der Seitenflügel ist dabei von einem Grundkörper, der eine tragende Struktur des Seitenflügels ausbildet, und einer auf dem Grundkörper angebrachten Polstereinheit gebildet, die eine Auflagefläche für ein in der Babyschale angeordnetes Kind ausbildet. Die Babyschale weist dabei vorzugsweise zwei Seitenflügel auf, die auf gegenüberliegenden Seiten der Babyschale angeordnet sind, wobei zumindest einer der beiden Seitenflügel bewegbar ausgebildet ist. Vorzugsweise sind beide Seitenflügel der Babyschale bewegbar angeordnet. Unter "bewegbar" soll dabei insbesondere verstanden werden, dass der Seitenflügel zumindest entlang einer Bewegungsrichtung zwischen wenigstens zwei Konfigurationen verstellbar ist. Dabei kann eine Bewegung des Seitenflügels eine Linearbewegung, eine Schwenkbewegung oder eine Kombination aus einer oder mehreren Linearbewegungen und Schwenkbewegungen sein. Unter einer "Anbindungskonfiguration des Seitenflügels" soll dabei insbesondere eine Konfiguration, insbesondere eine Stellung des Seitenflügels, verstanden werden, in der der Seitenflügel von dem Rückenlehnenbereich der Babyschale weggerichtet ist und insbesondere einen Seitenhalt für ein in der Babyschale angeordnetes Kind ausbildet, sodass das Kind für einen Transport in einem Kraftfahrzeug in der Babyschale gesichert ist. Unter einer "Komfortkonfiguration des Seitenflügels" soll dabei insbesondere eine Konfiguration, insbesondere eine Stellung des Seitenflügels, verstanden werden, in der der Seitenflügel um einen Winkel von vorzugsweise maximal 60 Grad zu einer im Wesentlichen parallel von dem Rückenlehnenbereich der Babyschale ausgebildeten Ebene verschwenkt ist und dadurch eine Liegefläche des Rückenlehnenbereichs seitlich in einer leicht abgeschrägten Weise erweitert. Vorteilhaft ist die Liegefläche des Rückenlehnenbereichs erweitert, wobei insbesondere durch die abgeschrägte Anordnung der Seitenflügel ein Seitenhalt zumindest teilweise erhalten wird. Vorzugsweise weist der Seitenflügel in der Komfortkonfiguration einen Winkel von vorzugsweise maximal 40 Grad, besonders vorteilhaft maximal 25 Grad, zu einer im Wesentlichen parallel von dem Rückenlehnenbereich der Babyschale ausgebildeten Ebene auf. Grundsätzlich wäre es aber auch ebenso denkbar, dass, insbesondere wenn keine Seitenabstützung benötigt wird, der Seitenflügel in der Komfortkonfiguration im Wesentlichen parallel zu der von dem Rückenlehnenbereich der Babyschale ausgebildeten Ebene ausgerichtet ist. Dadurch könnte die Liegefläche auf Kosten der Seitenabstützung vorteilhaft groß ausgebildet werden. Die Komfortkonfiguration ist für einen Gebrauch außerhalb des Grundmoduls, insbesondere außerhalb des Kraftfahrzeugs, vorgesehen. Dadurch kann die Babyschale besonders komfortabel in der Komfortkonfiguration und besonders sicher in der Anbindungskonfiguration ausgebildet werden.

Zudem wird vorgeschlagen, dass der wenigstens eine Seitenflügel der Babyschale schwenkbar angeordnet ist. Unter "schwenkbar" soll dabei insbesondere um wenigstens eine Schwenkachse drehbar gelagert verstanden werden. Dabei ist der wenigstens eine Seitenflügel vorzugsweise über ein Lager, vorzugsweise ein Scharnier, das eine Lagerachse ausbildet, zu dem Grundkörper der Babyschale schwenkbar gelagert. Dadurch kann der wenigstens eine Seitenflügel besonders einfach verstellbar an die Babyschale angebunden werden,

Erfindungsgemäß sichert der verstellbare Tragebügel zumindest in einer Tragestellung den wenigstens einen Seitenflügel in der Anbindungskonfiguration. Unter "sichert" soll dabei insbesondere verstanden werden, dass der Tragebügel eine Verstellung des wenigstens einen Seitenflügels aus der Anbindungskonfiguration heraus, insbesondere in die Komfortkonfiguration, verhindert. Der Tragebügel ist dabei dazu vorgesehen, den Seitenflügel formschlüssig in der Anbindungskonfiguration zu fixieren und insbesondere eine Bewegung des wenigstens einen Seitenflügels in Richtung seiner Komfortkonfiguration zu verhindern. Dadurch kann die Anbindungskonfiguration besonders einfach gesichert werden.

Des Weiteren wird vorgeschlagen, dass der Tragebügel in einer Freigabestellung dazu vorgesehen ist, zumindest den wenigstens einen Seitenflügel freizugeben. Unter "den Seitenflügel freigeben" soll dabei insbesondere verstanden werden, dass der Tragebügel in seiner Freigabestellung einen Weg für den Seitenflügel in Richtung seiner Komfortkonfiguration freigibt. In der Freigabestellung ist der Tragebügel aus einer Bewegungsbahn des Seitenflügels, die dieser bei einer Bewegung zwischen seiner Anbindungskonfiguration und seiner Komfortkonfiguration durchläuft, herausbewegt. Der Tragebügel fixiert den wenigstens einen Seitenflügel nicht in seiner Komfortkonfiguration. Dadurch kann der wenigstens eine Seitenflügel besonders einfach freigegeben werden.

Ferner wird vorgeschlagen, dass die Babyschale wenigstens ein bewegliches Kopfstützelement aufweist, das automatisch zusammen mit dem zumindest einen Seitenflügel verstellbar ist. Unter einem "Kopfstützelement" soll dabei insbesondere ein in einem oberen Bereich des Rückenlehnenbereichs der Babyschale angeordnetes Element verstanden werden, das zur Stützung, insbesondere für einen Seitenhalt eines Kopfes eines in der Babyschale angeordneten Kinds, vorgesehen ist, und dazu wenigstens einen im Wesentlichen parallel zu dem Rückenlehnenbereich ausgerichteten Mittelbereich und zwei seitlich angeordnete Seitenbereiche, die relativ zu dem Mittelbereich zwischen einer Anbindungskonfiguration und einer Komfortkonfiguration verschwenkt werden können, aufweist. Unter "automatisch zusammen mit dem Seitenflügel verstellbar" soll dabei insbesondere verstanden werden, dass eine Verstellung des wenigstens einen Seitenflügels mit wenigstens einem Seitenbereich des Kopfstützelements automatisiert und gekoppelt abläuft, also eine Verstellung des Seitenflügels zwischen seiner Anbindungskonfiguration und seiner Komfortkonfiguration immer mit einer entsprechenden Verstellung des entsprechenden Seitenbereichs des Kopfstützelements einhergeht. Dadurch kann eine Komfortkonfiguration der Babyschale besonders komfortabel ausgebildet werden und besonders einfach eingenommen werden.

Es wird weiterhin vorgeschlagen, dass das bewegliche Kopfstützelement und/oder der wenigstens eine Seitenflügel zur automatischen Verstellung federbelastet ausgebildet sind/ist. Unter "federbelastet" soll dabei insbesondere verstanden werden, dass ein Federelement eine Federkraft auf ein Element, wie insbesondere das Kopfstützelement und/oder den Seitenflügel, ausübt und dadurch dieses in eine definierte Richtung, insbesondere in Richtung der Komfortkonfiguration, drückt oder zieht. Unter einem "Federelement" soll dabei insbesondere ein Element verstanden werden, das insbesondere durch elastische Verformung aus einer Ruhestellung heraus eine Federkraft entgegen einer Auslenkungsbewegung erzeugt. Vorzugsweise ist das Federelement einstückig mit dem Kopfstützelement und/oder dem Seitenflügel ausgebildet, wobei das Kopfstützelement und/oder der Seitenflügel elastisch auslenkbar ausgebildet sind, um bei einer Verstellung, insbesondere bei einer Verstellung zwischen der Komfortkonfiguration und der Anbindungskonfiguration, durch elastische Verformung eine Rückstellkraft zu erzeugen. Ein Federelement kann insbesondere auch als eine mechanische Feder, wie insbesondere eine Spiralfeder, eine Blattfeder, eine Torsionsfeder, als eine Tellerfeder oder eine andere, dem Fachmann als sinnvoll erscheinende Feder, wie insbesondere eine hydraulische oder pneumatische Feder, wie insbesondere eine Gasdruckfeder, ausgebildet sein. Darunter, dass das "Kopfstützelement und/oder der wenigstens eine Seitenflügel federbelastet sind", soll dabei insbesondere verstanden werden, dass eine Federkraft des Federelements entweder an dem Seitenflügel, dem Kopfstützelement, insbesondere dem Seitenbereich des Kopfstützelements oder an dem Seitenflügel und dem Seitenbereich des Kopfstützelements, angreifen kann. Dadurch kann eine automatisierte Verstellung in die Komfortkonfiguration besonders einfach erfolgen.

Weiterhin wird vorgeschlagen, dass der Tragebügel bei einer Verstellung von einer Freigabestellung in eine Tragestellung den wenigstens einen Seitenflügel und das Kopfstützelement in ihre Anbindungskonfiguration verstellt. Darunter, dass "der Tragebügel den wenigstens einen Seitenflügel und das Kopfstützelement verstellt", soll dabei insbesondere verstanden werden, dass der Tragebügel bei einer Verstellung in seiner Tragestellung eine Kraft auf den Seitenflügel und/oder das Kopfstützelement ausübt, die diese in ihre Anbindungskonfiguration drückt oder zieht. Dadurch kann die Babyschale besonders einfach in ihre Anbindungskonfiguration gebracht werden.

Weiter wird vorgeschlagen, dass die Babyschale in einem Kopfbereich eine nach hinten abgesetzte Stufe aufweist, die von einem Grundkörper der Babyschale ausgebildet ist. Dadurch kann die Babyschale besonders vorteilhaft ausgebildet werden.

Zudem wird vorgeschlagen, dass die Babyschale wenigstens ein Beinauflageelement aufweist, das in seinem Winkel veränderbar ist. Unter einem "Beinauflageelement" soll dabei insbesondere ein Element verstanden werden, das zur Abstützung eines Fuß- und Beinbereichs des Kinds vorgesehen ist und dazu an einer unteren, dem Kopfstützelement abgewandten Seite des Grundkörpers der Babyschale angeordnet ist. Unter "in seinem Winkel veränderbar" soll dabei insbesondere verstanden werden, dass das Beinauflageelement über eine Lagerung verschwenkbar zu einem Teil der Babyschale, insbesondere zu dem Grundkörper der Babyschale, angeordnet ist. Dadurch kann eine besonders vorteilhaft komfortable Babyschale bereitgestellt werden.

Es wird weiter vorgeschlagen, dass das Beinauflageelement relativ zu einem Rückenlehnenbereich der Babyschale verstellbar ist. Unter einem "Rückenlehnenbereich" soll dabei insbesondere ein Bereich verstanden werden, der von dem Grundkörper der Babyschale ausgebildet ist und auf dem ein Kind in einem vorschriftsmäßig in der Babyschale angeordneten Zustand mit einem Rücken aufliegt. Dadurch kann die Beinauflage besonders vorteilhaft ausgebildet werden.

Des Weiteren wird vorgeschlagen, dass die Babyschale einen Kleinkindsitzwinkel von zumindest 129 Grad aufweist. Unter einem "Kleinkindsitzwinkel" soll dabei insbesondere ein Winkel verstanden werden, der zwischen einer Liegefläche der Babyschale und einem Beinauflageelement eingeschlossen ist, während die Babyschale zum Transport in einem Kraftfahrzeug in dem Grundmodul fest angeordnet ist. Dadurch kann eine besonders komfortable und zugleich sichere Babyschale bereitgestellt werden.

Ferner wird vorgeschlagen, dass die Babyschale in der Komfortkonfiguration einen Kleinkindliegewinkel von 160 Grad aufweist. Unter einem "Kleinkindliegewinkel" soll dabei insbesondere ein Winkel verstanden werden, der zwischen einer Liegefläche der Babyschale und einem Beinauflageelement eingeschlossen ist, während die Babyschale nicht in dem Grundmodul angeordnet ist und insbesondere in eine Komfortkonfiguration gebracht worden ist, um einen möglichst komfortablen Liegebereich in der Babyschale für ein Kleinkind bereitzustellen. Dadurch kann eine besonders komfortable Babyschale für eine Nutzung außerhalb eines Kraftfahrzeugs bereitgestellt werden.

Es wird weiterhin vorgeschlagen, dass die Babyschale zumindest einen Reducer aufweist, der in einem in der Babyschale eingesetzten Zustand einen Kindersitzwinkel von wenigstens 109 Grad und einen Kinderliegewinkel von 140 Grad aufweist. Unter einem "Reducer" soll dabei insbesondere ein in die Babyschale wahlweise einsetzbares und dabei verliersicher mit der Babyschale verbindbares Element verstanden werden, das verschiedene Maße der Babyschale, wie insbesondere einen Winkel oder Abstände, so verändert, dass im Vergleich zu einer Nutzung der Babyschale ohne den Reducer Kinder anderer Größen sicher und komfortabel in der Babyschale transportierbar sind. Der Reducer kann zur Verwendung in der Babyschale vorteilhaft lose in die Babyschale eingelegt werden und dabei beispielsweise durch eine Durchführung wenigstens eines Teils eines internen Gurtsystems der Babyschale in der Babyschale lose befestigt werden. Grundsätzlich ist es auch denkbar, dass der Reducer über zusätzliche Befestigungselemente, wie insbesondere Druckknöpfe, mit der Babyschale koppelbar ist, um den Reducer vorteilhaft in der Babyschale zu fixieren. Dadurch kann die Babyschale besonders einfach für unterschiedlich große Kinder, insbesondere für Kinder und für Kleinkinder, angepasst werden.

Die erfindungsgemäße Babyschalenvorrichtung soll hierbei nicht auf die oben beschriebene Anwendung und Ausführungsform beschränkt sein. Insbesondere kann die erfindungsgemäße Babyschalenvorrichtung zu einer Erfüllung einer hierin beschriebenen Funktionsweise eine von einer hierin genannten Anzahl von einzelnen Elementen, Bauteilen und Einheiten abweichende Anzahl aufweisen, soweit der Gegenstand nicht über den Schutzbereich der Ansprüche hinausgeht.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen, soweit der Gegenstand nicht über den Schutzbereich der Ansprüche hinausgeht.

Es zeigen:
- Fig. 1: eine schematische Seitenansicht der erfindungsgemäßen Babyschalenvorrichtung mit einem Grundmodul und einer darin eingesetzten Babyschale,
- Fig. 2: eine schematische Darstellung der Babyschale in einer Anbindungskonfiguration außerhalb des Grundmoduls,
- Fig. 3: eine schematische Seitenansicht der Babyschale in einer teilweisen Komfortkonfiguration außerhalb des Grundmoduls,
- Fig. 4: eine schematische Darstellung der Babyschale in der Komfortkonfiguration außerhalb des Grundmoduls,
- Fig. 5: eine schematische Seitenansicht der Babyschale in einer Komfortkonfiguration außerhalb des Grundmoduls,
- Fig. 6: eine stark schematisierte Seitenansicht der Babyschale mit einer nach hinten abgesetzten Stufe,
- Fig. 7: eine stark schematisierte Seitenansicht der Babyschale in einem Kindersitzwinkel und einem Kinderliegewinkel und
- Fig. 8: eine stark schematisierte Seitenansicht der Babyschale in einem Kleinkindsitzwinkel und einem Kleinkindliegewinkel.

### Beschreibung des Ausführungsbeispiels

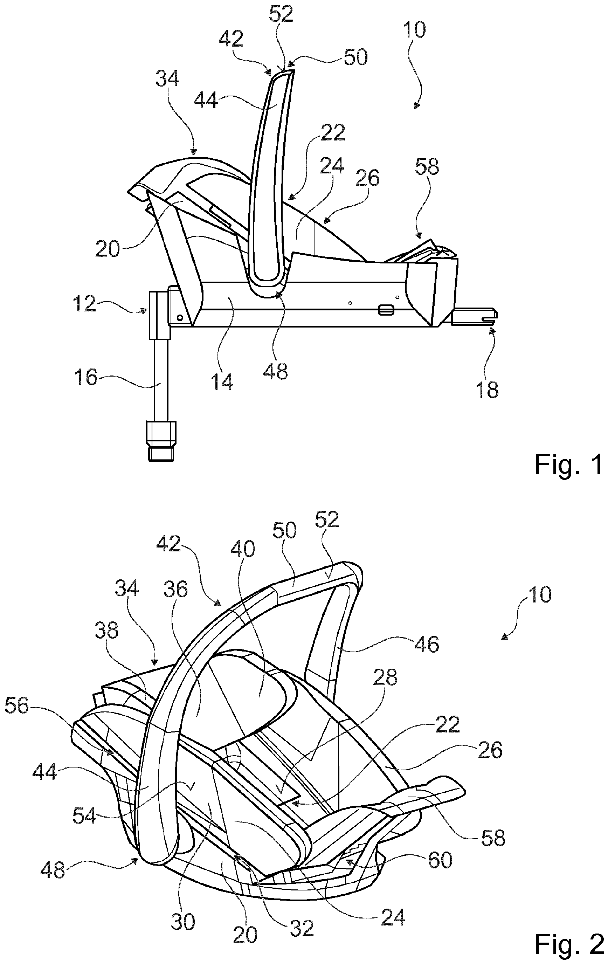

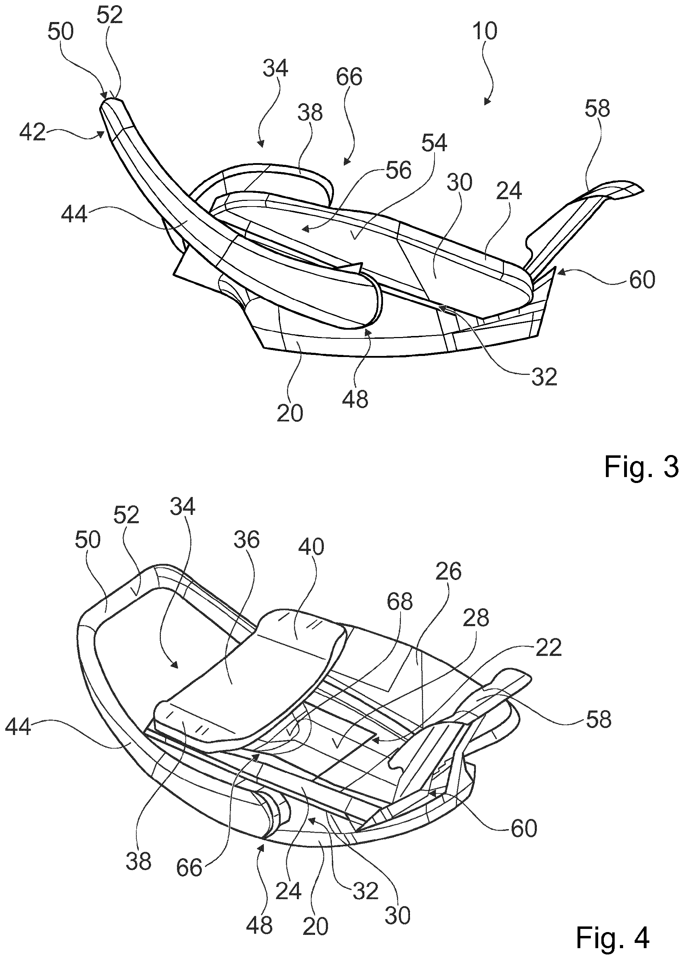

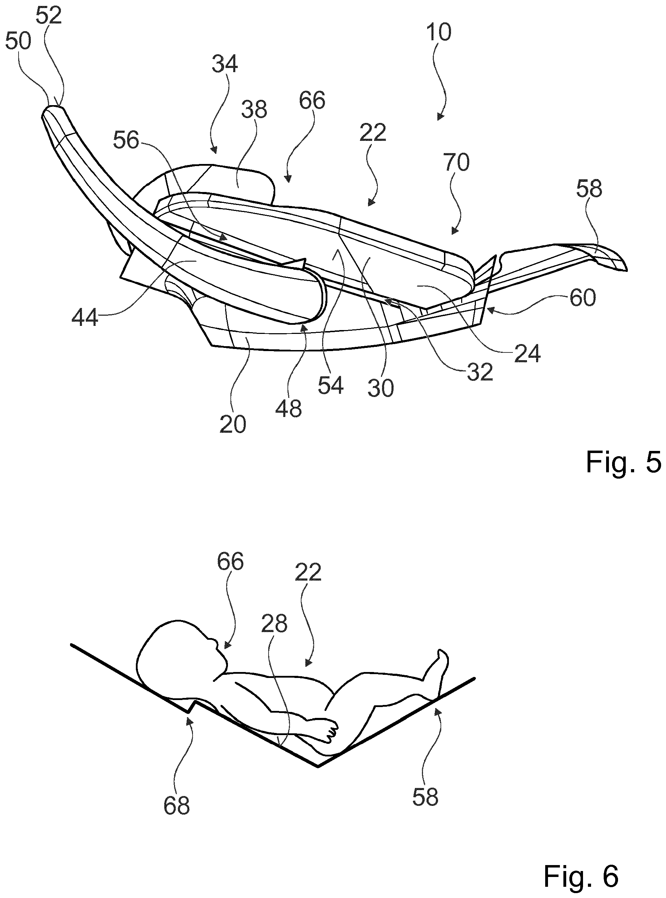

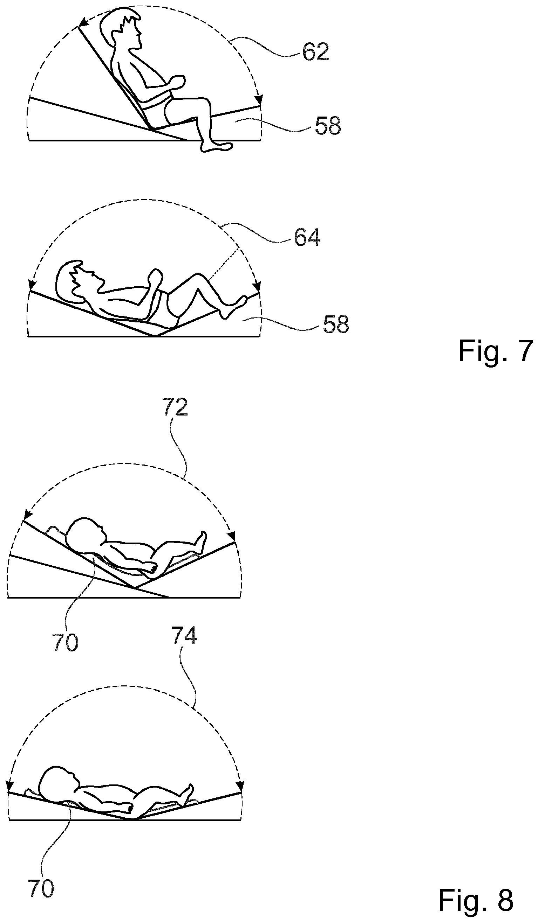

Die Figuren 1 bis 8 zeigen eine erfindungsgemäße Babyschalenvorrichtung. Die Babyschalenvorrichtung ist zum sicheren Transport eines Babys oder Kleinkinds in einem Kraftfahrzeug vorgesehen. Die Babyschalenvorrichtung umfasst eine Babyschale 10. Die Babyschale 10 ist zum Transport eines Kleinkinds vorgesehen. In der Babyschale 10 kann ein Baby oder ein Kleinkind im Wesentlichen liegend transportiert werden. Die Babyschalenvorrichtung umfasst ein Grundmodul 12, das dazu vorgesehen ist, fest in einem Kraftfahrzeug angebunden zu werden. Das Grundmodul 12 ist getrennt von der Babyschale 10 ausgebildet. Das Grundmodul 12 ist dazu vorgesehen, auf einem Kraftfahrzeugsitz und/oder einer Kraftfahrzeugsitzbank fest und verkehrssicher angebunden zu werden. Das Grundmodul 12 umfasst einen Grundkörper 14. Der Grundkörper 14 bildet eine tragende Struktur des Grundmoduls 12 aus. An einem vorderen Ende des Grundkörpers 14 weist das Grundmodul 12 einen Abstützfuß 16 auf. Der Abstützfuß 16 ist dazu vorgesehen, das Grundmodul 12 an einem Boden des Kraftfahrzeugs, insbesondere in einem Fußbereich des Kraftfahrzeugs, abzustützen. An einem hinteren Ende des Grundmoduls 12 weist das Grundmodul 12 Formschlusselemente 18 auf, über die das Grundmodul 12 fest mit einer tragenden Struktur des Kraftfahrzeugs, insbesondere des Kraftfahrzeugsitzes, auf dem das Grundmodul 12 angeordnet ist, verbindbar ist. Die Formschlusselemente 18 sind dabei als ISOFIX-Konnektoren ausgebildet. Die als ISOFIX-Konnektoren ausgebildeten Formschlusselemente 18 und der Abstützfuß 16 sind aus dem Stand der Technik bekannt und entsprechend ausgebildet, weswegen sie hier nicht näher beschrieben werden sollen. Die Babyschale 10 ist dazu vorgesehen, zum Transport in dem Kraftfahrzeug fest mit dem in dem Kraftfahrzeug angebundenen Grundmodul 12 verbunden zu werden. Dazu weist das Grundmodul 12 in einem Innenbereich des Grundkörpers 14 des Grundmoduls 12 eine Anbindungseinheit auf. Die nicht näher dargestellte Anbindungseinheit ist von mehreren Formschlusselementen ausgebildet, über die die Babyschale 10 formschlüssig mit dem Grundmodul 12 koppelbar ist. Die Babyschale 10 weist dazu an ihrer Unterseite eine korrespondierend ausgebildete Anbindungseinheit auf. Die Babyschale 10 kann von oben in den Grundkörper 14 des Grundmoduls 12 eingesetzt werden und über die Anbindungseinheiten formschlüssig fest mit dem Grundmodul 12 gekoppelt werden. Dabei ist die Babyschale 10 transportsicher mit dem Grundmodul 12 gekoppelt. Insbesondere auch in einem Crashfall, in dem höhere Kräfte auf das Grundmodul 12 und die Babyschale 10 wirken, ist die Babyschale 10 sicher und fest mit dem Grundmodul 12 gekoppelt.

Die Babyschale 10 weist einen Grundkörper 20 auf. Der Grundkörper 20 bildet eine tragende Struktur der Babyschale 10 aus. Der Grundkörper 20 ist aus einem Kunststoff gebildet. Der Grundkörper 20 ist insbesondere von einem Hartplastik gebildet. Grundsätzlich ist es auch denkbar, dass der Grundkörper 20 von einem anderen, dem Fachmann als sinnvoll erscheinenden Material gebildet ist. An einer Unterseite des Grundkörpers 20 ist die nicht näher dargestellte Anbindungseinheit der Babyschale 10 angeordnet. Der Grundkörper 20 bildet einen Rückenlehnenbereich 22 der Babyschale 10 aus. Der Rückenlehnenbereich 22, den der Grundkörper 20a ausbildet, ist dabei leicht konkav ausgebildet. Grundsätzlich ist auch denkbar, dass der Rückenlehnenbereich 22 im Wesentlichen eben ausgebildet ist. Der Rückenlehnenbereich 22 ist als ein Bereich ausgebildet, auf dem ein in der Babyschale 10 angeordnetes Kind mit seinem Rücken aufliegt. Die Babyschale 10 weist ein nicht näher dargestelltes, integriertes Gurtsystem auf, das zur Sicherung eines in der Babyschale 10 angeordneten Kinds oder Kleinkinds vorgesehen ist. Das integrierte Gurtsystem ist als ein Dreipunktgurt ausgebildet. Das interne Gurtsystem ist insbesondere als ein Y-Gurt ausgebildet, der insbesondere zwei Schultergurte und einen Schrittgurt aufweist, die über ein Gurtschloss miteinander verbindbar sind. Grundsätzlich wäre es auch denkbar, dass das interne Gurtsystem als ein Fünfpunktgurt ausgebildet ist. Dabei ist das Gurtsystem entsprechend einem aus dem Stand der Technik bekannten Fünfpunktgurt ausgebildet und soll deshalb hier nicht näher beschrieben werden.

Die Babyschale 10 weist einen ersten Seitenflügel 24 auf. Der erste Seitenflügel 24 ist auf einer ersten Seite der Babyschale 10 angeordnet. Die Babyschale 10 weist einen zweiten Seitenflügel 26 auf. Der zweite Seitenflügel 26 ist auf einer der ersten Seite gegenüberliegenden Seite der Babyschale 10 angeordnet. Die Seitenflügel 24, 26 sind dazu vorgesehen, zumindest in einer Stellung eine seitliche Abstützung für ein Kind bereitzustellen. Die Seitenflügel 24, 26 sind zwischen einer Anbindungskonfiguration und einer Komfortkonfiguration verstellbar. In der Anbindungskonfiguration sind die Seitenflügel 24, 26 in einer maximal abgewinkelten Stellung zu dem Rückenlehnenbereich 22 angeordnet. In der Anbindungskonfiguration bilden die Seitenflügel 24, 26 einen maximalen seitlichen Halt für ein in der Babyschale 10 liegendes Kind aus. In der Komfortkonfiguration sind die Seitenflügel 24, 26 nach unten geklappt und erweitern eine von dem Rückenlehnenbereich 22 ausgebildete Liegefläche 28 der Babyschale seitlich. Die beiden Seitenflügel 24, 26 sind im Wesentlichen gleich ausgebildet, weswegen im Folgenden lediglich der Seitenflügel 24 näher beschrieben wird. Zur Erläuterung des zweiten Seitenflügels 26 kann die folgende Beschreibung des ersten Seitenflügels 24 herangezogen werden. Der Seitenflügel 24 weist einen Grundkörper 30 auf. Der Grundkörper 30 ist von einer Kunststoffschale, insbesondere einer Hartplastikschale, mit einem Einleger, vorzugsweise einem Einleger aus einem Styropor oder einem anderen, dem Fachmann als sinnvoll erscheinenden Material, gebildet. Der Seitenflügel 24 ist bewegbar an dem Grundkörper 20 der Babyschale 10 angeordnet. Der Seitenflügel 24 ist schwenkbar mit dem Grundkörper 20 der Babyschale 10 verbunden. Die Babyschale 10 weist zur Anbindung des Seitenflügels 24 an den Grundkörper 20 eine Lagereinheit 32 auf. Die Lagereinheit 32 ist als ein Schwenklager ausgebildet. Die Lagereinheit 32 ist als ein Scharnier ausgebildet. Die Lagereinheit 32 bildet eine Schwenkachse aus. Über die Lagereinheit 32 ist der Grundkörper 30 des Seitenflügels 24 mit dem Grundkörper 20 der Babyschale 10 verbunden. Mittels der Lagereinheit 32 ist der Seitenflügel 24 zwischen der Anbindungskonfiguration und der Komfortkonfiguration verschwenkbar. Der Seitenflügel 24 ist zwischen der Anbindungskonfiguration und der Komfortkonfiguration um 55 Grad schwenkbar. Grundsätzlich ist es denkbar, dass der Seitenflügel 24 zwischen der Anbindungskonfiguration und der Komfortkonfiguration um einen Winkel schwenkbar ist, der in einem Bereich zwischen 30 Grad und 120 Grad liegt.

Die Babyschale 10 umfasst ein Kopfstützelement 34. Das Kopfstützelement 34 ist zumindest teilweise beweglich ausgebildet. Das Kopfstützelement 34 ist in einem oberen Bereich des Rückenlehnenbereichs 22 angeordnet. Das Kopfstützelement 34 ist in dem Rückenlehnenbereich 22 fest mit dem Grundkörper 20 der Babyschale 10 verbunden. Das Kopfstützelement 34 ist dabei axial verschiebbar mit dem Grundkörper 20 der Babyschale 10 verbunden. Dadurch kann das Kopfstützelement 34 vorteilhaft an unterschiedlich große Kinder angepasst werden. Grundsätzlich ist es auch denkbar, dass das Kopfstützelement 34 ortsfest in dem Rückenlehnenbereich 22 an dem Grundkörper 20 der Babyschale 10 angebunden ist. Das Kopfstützelement 34 weist einen Mittelbereich 36 auf. Der Mittelbereich 36 ist im Wesentlichen parallel zu dem Rückenlehnenbereich 22 angeordnet. Das Kopfstützelement 34 weist an gegenüberliegenden Seiten des Mittelbereichs 36 jeweils einen Seitenbereich 38, 40 auf. Die Seitenbereiche 38, 40 sind schwenkbar zu dem Mittelbereich 36 ausgebildet. Das Kopfstützelement 34 kann durch Verschwenken der Seitenbereiche 38, 40 zu dem Mittelbereich 36 zwischen einer Anbindungskonfiguration und einer Komfortkonfiguration verstellt werden. In der Anbindungskonfiguration stehen die Seitenbereiche 38, 40 des Kopfstützelements 34 nach oben von dem Mittelbereich 36 weg. Die Seitenbereiche 38, 40 schließen mit dem Mittelbereich 36 des Kopfstützelements 34 jeweils einen Winkel von 100 Grad ein. Grundsätzlich ist es auch denkbar, dass die Seitenbereiche 38, 40 einen anderen Winkel, der in einem Bereich von 70 Grad bis 120 Grad liegt, mit dem Mittelbereich 36 einschließen. In der Anbindungskonfiguration bieten die Seitenbereiche 38, 40 des Kopfstützelements 34 einen guten Seitenhalt für einen Kopf eines in der Babyschale 10 liegenden Kinds. In der Komfortkonfiguration sind die Seitenbereiche 38, 40 in einem Winkel von 35 Grad zu einer von dem Rückenlehnenbereich 22 der Babyschale 10 ausgebildeten Ebene ausgerichtet. Dadurch bilden die Seitenbereiche 38, 40 weniger Seitenhalt aus als in der Anbindungskonfiguration, wobei insbesondere ein größerer und komfortabler Liegebereich für ein Kind bereitgestellt werden kann. Grundsätzlich wäre es aber ebenso denkbar, dass die Seitenbereiche 38, 40 im Wesentlichen parallel zu dem Mittelbereich 36 angeordnet sind. Grundsätzlich ist es auch denkbar, dass die Seitenbereiche 38, 40 in der Komfortkonfiguration einen Winkel von 200 Grad bis 140 Grad mit dem Mittelbereich 36 einschließen. In der Komfortkonfiguration erweitern die Seitenbereiche 38, 40 einen Kopfliegebereich des Kopfstützelements 34 seitlich. In der Komfortkonfiguration hat ein in der Babyschale 10 liegendes Kind eine größere Kopffreiheit.

Das Kopfstützelement 34 ist innerhalb der Seitenflügel 24, 26 der Babyschale 10 angeordnet. Die Seitenflügel 24, 26 umgeben das Kopfstützelement 34 seitlich. Das Kopfstützelement 34 kontaktiert dabei mit Außenseiten seiner Seitenbereiche 38, 40 jeweils eine Innenseite eines der Seitenflügel 24, 26. Das Kopfstützelement 34 überragt die Seitenflügel 24, 26 mit seinen Seitenbereichen 38, 40. In der Anbindungskonfiguration weisen die einander zugeordneten Seitenbereiche 38, 40 und Seitenflügel 24, 26 jeweils im Wesentlichen eine gleiche Ausrichtung auf. In der Anbindungskonfiguration sind die einander zugeordneten Seitenbereiche 38, 40 und Seitenflügel 24, 26 jeweils im Wesentlichen parallel zueinander ausgerichtet. In der Komfortkonfiguration sind die einander zugeordneten Seitenbereiche 38, 40 und Seitenflügel 24, 26 jeweils im Wesentlichen parallel zueinander ausgerichtet. Grundsätzlich ist es auch denkbar, dass die einander zugeordneten Seitenbereiche 38, 40 und Seitenflügel 24, 26 in der Anbindungskonfiguration und/oder in der Komfortkonfiguration jeweils in einem Winkel zueinander ausgerichtet sind, der in einem Bereich von 0 Grad bis 30 Grad liegt. Das Kopfstützelement 34 ist zusammen mit den Seitenflügeln 24, 26 verstellbar. Das Kopfstützelement 34 ist automatisch zusammen mit den Seitenflügeln 24, 26 der Babyschale 10 zwischen deren Komfortkonfigurationen und deren Anbindungskonfigurationen verstellbar. Die Seitenbereiche 38, 40 sind zusammen mit den Seitenflügeln 24, 26 automatisch von der Anbindungskonfiguration in die Komfortkonfiguration verstellbar. Zur automatischen Verstellung von der Anbindungskonfiguration in die Komfortkonfiguration ist das Kopfstützelement 34 federbelastet. Zur automatischen Verstellung von der Anbindungskonfiguration in die Komfortkonfiguration sind die Seitenbereiche 38, 40 des Kopfstützelements 34 federbelastet. Das Kopfstützelement 34 weist nicht näher dargestellte Federelemente auf, die dazu vorgesehen sind, jeweils eine Federkraft auf einen der Seitenbereiche 38, 40 des Kopfstützelements 34 auszuüben. Die Federelemente sind in das Kopfstützelement 34 integriert. Je ein Federelement übt eine nach außen gerichtete Federkraft auf einen Seitenbereich 38, 40 aus. Durch die Federkraft werden die Seitenbereiche 38, 40 des Kopfstützelements 34 nach außen, in Richtung des entsprechend außerhalb des Seitenbereichs 38, 40 angeordneten Seitenflügels 24, 26 gedrückt. Wirkt von außen keine Haltekraft auf die Seitenflügel 24, 26 und/oder die Seitenbereiche 38, 40 des Kopfstützelements 34, werden die Seitenbereiche 38, 40 des Kopfstützelements 34 zusammen mit den Seitenflügeln 24, 26 automatisch von der Anbindungskonfiguration in die Komfortkonfiguration verstellt. Die Federelemente sind einstückig mit den Seitenbereichen 38, 40 des Kopfstützelements 34 ausgebildet. Die einstückig mit den Seitenbereichen 38, 40 des Kopfstützelements 34 ausgebildeten Federelemente erzeugen die Federkraft, insbesondere durch eine elastische Verformung des Kopfstützelements 34. Grundsätzlich ist es auch denkbar, dass die Federelemente als separate Federelemente ausgebildet sind, beispielsweise als Blattfedern. Grundsätzlich ist es auch denkbar, dass die Federelemente als andere, dem Fachmann als sinnvoll erscheinende Federelemente, wie beispielsweise als Zug- oder Druckfedern, ausgebildet sind. Grundsätzlich ist es ebenso denkbar, dass die Seitenflügel 24, 26 mittels wenigstens eines Federelements federbelastet sind und dass die Seitenbereiche 38, 40 durch form-, kraft- und/oder stoffschlüssige Verbindungen fest mit den Seitenflügeln 24, 26 gekoppelt sind und die Seitenflügel 24, 26 bei einer Verstellung von der Anbindungskonfiguration in die Komfortkonfiguration nach außen ziehen. Grundsätzlich ist es auch denkbar, dass sowohl auf die Seitenflügel 24, 26 als auch auf die Seitenbereiche 38, 40 des Kopfstützelements 34 jeweils ein Federelement eine Federkraft zur Verstellung in die Komfortkonfiguration ausübt.

Die Babyschale 10 weist einen Tragebügel 42 auf. Der Tragebügel 42 ist zwischen zumindest zwei Stellungen verstellbar. Der Tragebügel 42 ist verstellbar an dem Grundkörper 20 der Babyschale 10 angebunden. Der Tragebügel 42 ist insbesondere drehbar an dem Grundkörper 20 der Babyschale 10 angebunden. Der Tragebügel 42 ist im Wesentlichen U-förmig ausgebildet. Der Tragebügel 42 weist einen im Wesentlichen U-förmigen Verlauf auf. Der Tragebügel 42 erstreckt sich dabei von einer ersten Seite des Grundkörpers 20 bis auf eine gegenüberliegende zweite Seite des Grundkörpers 20. Der Tragebügel 42 weist zwei parallel zueinander verlaufende Seitenteile 44, 46 auf. Dabei ist das erste Seitenteil 44 auf der einen ersten Seite des Grundkörpers 20 angeordnet und das zweite Seitenteil 46 auf der gegenüberliegenden zweiten Seite des Grundkörpers 20. Die Seitenteile 44, 46 des Tragebügels 42 sind im Wesentlichen identisch zueinander ausgebildet. Die Seitenteile 44, 46 des Tragebügels 42 sind jeweils mit einem ersten Ende mit dem Grundkörper 20 der Babyschale 10 verbunden. Die ersten Enden der Seitenteile 44, 46 des Tragebügels 42 sind jeweils über ein Drehlager 48 mit dem Grundkörper 20 der Babyschale 10 verbunden. Über die Drehlager 48 ist der Tragebügel 42 verstellbar an dem Grundkörper 20 der Babyschale 10 angebunden. An einem zweiten Ende sind die Seitenteile 44, 46 mittels eines Verbindungsteils 50 des Tragebügels 42 miteinander verbunden. Das Verbindungsteil 50 erstreckt sich von dem einen Seitenteil 44 bis zu dem gegenüberliegenden Seitenteil 46. Das Verbindungsteil 50 überspannt den Grundkörper 20 der Babyschale 10. Die Seitenteile 44, 46 und das Verbindungsteil 50 bilden den Tragebügel 42 aus. Die Seitenteile 44, 46 und das Verbindungsteil 50 sind einstückig miteinander ausgebildet. Das Verbindungsteil 50 bildet einen Haltebereich 52 aus, der dazu vorgesehen ist, dass er von einer Person zum Tragen der Babyschale 10 ergriffen werden kann.

Über die Drehlager 48 ist der Tragebügel 42 zwischen zwei Stellungen verstellbar. Der Tragebügel 42 ist zwischen einer Tragestellung und einer Freigabestellung verstellbar. Die zwei Stellungen sind insbesondere als Maximalstellungen ausgebildet. Der Tragebügel 42 ist zwischen der Tragestellung und der Freigabestellung veschwenkbar.

Der Tragebügel 42 ist zwischen der Tragestellung und der Freigabestellung um 53 Grad veschwenkbar. Der Tragebügel 42 ist in der Tragestellung und in der Freigabestellung arretierbar. Vorteilhaft ist der Tragebügel 42 in wenigstens einer dritten Stellung zwischen den beiden Maximalstellungen arretierbar. Zur Arretierung in der Freigabestellung und in der Tragestellung weist die Babyschale 10 einen nicht näher dargestellten Arretiermechanismus auf, der in Bereichen der Drehlager 48 angeordnet ist. Grundsätzlich ist es auch denkbar, dass der Tragebügel 42 in weiteren Stellungen arretierbar ist und/oder dass der Tragebügel 42 stufenlos arretierbar ist. In der Tragestellung ist der Tragebügel 42 so ausgerichtet, dass sich die Seitenteile 44, 46 nach oben, von dem Rückenlehnenbereich 22 der Babyschale 10 weg, erstrecken und das Verbindungsteil 50, welches den Haltebereich 52 ausbildet, oberhalb des Grundkörpers 20 der Babyschale 10 angeordnet ist und diesen überspannt. Dabei ist ein Abstand zwischen der Liegefläche 28, die den Rückenlehnenbereich 22 ausbildet, so groß, dass die Babyschale 10 problemlos ergriffen werden kann, wenn ein Kind in der Babyschale 10 liegt.

Der Tragebügel 42 ist in der Tragestellung dazu vorgesehen, die Seitenflügel 24, 26 in ihrer Anbindungskonfiguration zu sichern. Der Tragebügel 42 begrenzt die Seitenflügel 24, 26 in seiner Tragestellung nach außen hin. Der Tragebügel 42 liegt mit seinen Innenseiten in seiner Tragestellung an Außenseiten 54 der Seitenflügel 24, 26 an. Der Tragebügel 42 liegt dabei so eng an den Seitenflügeln 24, 26 an, dass dieser die Seitenflügel 24, 26 in ihre Anbindungskonfiguration drückt. Der Tragebügel 42 drückt die Seitenflügel 24, 26 und dadurch die Seitenbereiche 38, 40 des Kopfstützelements 34 in ihre Anbindungskonfiguration. Der Tragebügel 42 drückt die Seitenflügel 24, 26 und dadurch die Seitenbereiche 38, 40 des Kopfstützelements 34, entgegen der von den Federelementen auf die Seitenbereiche 38, 40 des Kopfstützelements 34 wirkenden Federkraft, in die Anbindungskonfiguration. Ist der Tragebügel 42 in der Tragestellung, können die Seitenflügel 24, 26 und die Seitenbereiche 38, 40 des Kopfstützelements 34 nicht in ihre Komfortkonfiguration gebracht werden.

In der Freigabestellung ist der Tragebügel 42 nach hinten, hinter ein hinteres Ende des Grundkörpers 20 der Babyschale 10 geschwenkt. Das Verbindungsteil 50 des Tragebügels 42 ist hinter dem hinteren Ende des Grundkörpers 20 der Babyschale 10 angeordnet. Der Tragebügel 42 ist aus einem Bewegungsbereich der Seitenflügel 24, 26 herausbewegt. Der Tragebügel 42 ist in der Freigabestellung so angeordnet, dass die Seitenteile 44, 46 unterhalb der Seitenflügel 24, 26 seitlich des Grundkörpers 20 der Babyschale 10 verlaufen. Der Tragebügel 42 gibt in der Freigabestellung die Seitenflügel 24, 26 frei. Der Tragebügel 42 stellt den federbelasteten Seitenbereichen 38, 40 des Kopfstützelements 34 in der Freigabestellung keine Gegenkraft mehr entgegen. Der Tragebügel 42 ist in der Freigabestellung mit seinen Seitenteilen 44, 46 aus Bewegungsbahnen der Seitenflügel 24, 26 herausbewegt. Ist der Tragebügel 42 in der Freigabestellung, können die Seitenflügel 24, 26 und dadurch auch die Seitenbereiche 38, 40 des Kopfstützelements 34 in ihre Komfortkonfigurationen bewegt werden.

Bei einer Verstellung des Tragebügels 42 von seiner Freigabestellung, in der die Seitenflügel 24, 26 und auch die Seitenbereiche 38, 40 des Kopfstützelements 34 in ihren Komfortkonfigurationen angeordnet sind, in seine Tragestellung ist der Tragebügel 42 dazu vorgesehen, die Seitenflügel 24, 26 in ihre Anbindungskonfiguration zu verstellen. Dadurch verstellt der Tragebügel 42 über die Seitenflügel 24, 26 auch die Seitenbereiche 38, 40 des Kopfstützelements 34 in ihre Anbindungskonfiguration. Dazu bilden die Außenseiten 54 eine Führungskontur 56 aus, die dazu vorgesehen ist, dass der Tragebügel 42 mit seinen Seitenteilen 44, 46 die Seitenflügel 24, 26 bei einer Verstellung von der Freigabestellung in die Tragestellung betriebssicher in ihre Anbindungskonfiguration verstellt.

Die Babyschale 10 umfasst ein Beinauflageelement 58. Das Beinauflageelement 58 ist mit dem Grundkörper 20 der Babyschale 10 verbunden. Das Beinauflageelement 58 ist an einem unteren Ende des Grundkörpers 20 der Babyschale 10 angeordnet. Das Beinauflageelement 58 ist in seinem Winkel veränderbar. Das Beinauflageelement 58 ist schwenkbar mit dem Grundkörper 20 der Babyschale 10 verbunden. Das Beinauflageelement 58 ist relativ zu dem Rückenlehnenbereich 22 der Babyschale 10 verstellbar. Zur Anbindung an den Grundkörper 20 weist die Babyschale 10 eine Lagereinheit 60 auf. Die Lagereinheit 60 lagert das Beinauflageelement 58 schwenkbar zu dem Grundkörper 20. Die Lagereinheit 60 ist an dem vorderen Ende des Grundkörpers 20 der Babyschale 10 angebunden. Über die Lagereinheit 60 ist das Beinauflageelement 58 zwischen zwei Stellungen verstellbar. Grundsätzlich ist es denkbar, dass das Beinauflageelement 58 zwischen weiteren Stellungen verstellbar ist. Mittels der Lagereinheit 60 ist das Beinauflageelement 58 um einen Winkel von 31 Grad zwischen zwei Stellungen verstellbar. Grundsätzlich ist es auch denkbar, dass das Beinauflageelement 58 zwischen den beiden Stellungen um einen Winkel verstellbar ist, der in einem Winkelbereich von 10 Grad bis 55 Grad liegt. Das Beinauflageelement 58 ist zwischen einer Anbindungskonfiguration und einer Komfortkonfiguration verstellbar. In der Anbindungskonfiguration ist das Beinauflageelement 58 in einer hochgeklappten Stellung ausgerichtet. In der hochgeklappten Stellung schließt das Beinauflageelement 58 mit der Liegefläche 28 des Rückenlehnenbereichs 22 einen Winkel von 112 Grad ein. Die Babyschale 10 bildet dadurch einen Kindersitzwinkel 62 von 112 Grad aus. In der Anbindungskonfiguration des Beinauflageelements 58 bildet die Babyschale 10 den Kindersitzwinkel 62 von 112 Grad aus, der zum Transport in dem Kraftfahrzeug besonders vorteilhaft ist. Grundsätzlich ist es auch denkbar, dass der Kindersitzwinkel 62 in einem Winkelbereich von 105 Grad bis 120 Grad liegt. In der Komfortkonfiguration ist das Beinauflageelement 58 in einer heruntergeklappten Stellung ausgerichtet. In der heruntergeklappten Stellung schließt das Beinauflageelement 58 mit der Liegefläche 28 des Rückenlehnenbereichs 22 einen Winkel von 142 Grad ein. Die Babyschale 10 bildet dadurch einen Kinderliegewinkel 64 von 142 Grad aus. In der Komfortkonfiguration des Beinauflageelements 58 bildet die Babyschale 10 den Kinderliegewinkel 64 von 142 Grad aus, der besonders komfortabel ist und insbesondere für einen Gebrauch der Babyschale 10 außerhalb eines Kraftfahrzeugs vorgesehen ist. Grundsätzlich ist es auch denkbar, dass der Kinderliegewinkel 64 in einem Winkelbereich von 130 Grad bis 170 Grad liegt.

Die Babyschale 10 weist einen Kopfbereich 66 auf. Der Kopfbereich 66 ist unmittelbar unterhalb des Kopfstützelements 34 angeordnet. In dem Kopfbereich 66 weist die Babyschale 10 eine nach hinten abgesetzte Stufe 68 auf. Die nach hinten abgesetzte Stufe 68 ist von dem Grundkörper 20 der Babyschale 10 ausgebildet. Die nach hinten abgesetzte Stufe 68 ist in die Liegefläche 28 des Rückenlehnenbereichs 22 eingebracht. Die nach hinten abgesetzte Stufe 68 ist dabei um 20 mm von der Liegefläche 28 des Rückenlehnenbereichs 22 nach hinten abgesetzt. Ein Übergang von der Liegefläche 28 zu der nach hinten abgesetzten Stufe 68 kann dabei abrupt über einen Winkel von 90 Grad erfolgen oder beispielsweise durch eine geneigte Fläche. Durch die Stufe 68 kann ein Nach-vorne-Kippen eines Kopfs eines in der Babyschale 10 liegenden Kinds vorteilhaft verhindert werden.

Die Babyschale 10 umfasst einen Reducer 70, der wahlweise in die Babyschale 10 einsetzbar ist. Der Reducer 70 ist dazu vorgesehen, in die Babyschale 10 auf der Liegefläche 28 und dem Beinauflageelement 58 angebracht zu werden, um einen Winkel der Babyschale 10 und Abmessungen eines Liegebereichs der Babyschale 10 an kleinere Kinder anzupassen. Der Reducer 70 ist aus einem Schaumstoff und einem den Schaumstoff umgebenden Bezug hergestellt. Der Reducer 70 ist verliersicher mit der Babyschale 10 koppelbar. Der Reducer 70 ist dazu vorgesehen, in einer Anbindungskonfiguration der Babyschale 10 einen Kleinkindsitzwinkel 72 von 129 Grad bereitzustellen. In einer Komfortkonfiguration der Babyschale 10, in der das Beinauflageelement 58 heruntergeklappt ist, ist der Reducer 70 dazu vorgesehen, einen Kleinkindliegewinkel 74 von 160 Grad bereitzustellen.

Die Babyschale 10 weist eine nicht näher dargestellte Sperrvorrichtung auf, die dazu vorgesehen ist, die Anbindungseinheit der Babyschale 10, über die die Babyschale 10 mit dem Grundmodul 12 verbindbar ist, zu sperren. Ist die Anbindungseinheit gesperrt, kann die Babyschale 10 nicht mit dem Grundmodul 12 gekoppelt werden. Die Sperrvorrichtung ist dazu vorgesehen, die Anbindungseinheit der Babyschale 10 zu sperren, wenn die Seitenflügel 24, 26 in ihrer Komfortkonfiguration angeordnet sind. Die Sperrvorrichtung ist dazu vorgesehen, die Anbindungseinheit der Babyschale 10 zu entsperren, wenn die Seitenflügel 24, 26 in ihrer Anbindungskonfiguration sind. Die Sperrvorrichtung ist dazu vorgesehen, die Anbindungseinheit der Babyschale 10 zu sperren, wenn die Babyschale 10 in ihrer Komfortkonfiguration konfiguriert ist. Die Sperrvorrichtung ist dazu vorgesehen, die Anbindungseinheit der Babyschale 10 zu entsperren, wenn die Babyschale 10 in ihrer Anbindungskonfiguration konfiguriert ist. Die Sperrvorrichtung ist dazu vorgesehen, die Anbindungseinheit der Babyschale 10 zu entsperren, wenn der Tragebügel 42 in seiner Tragestellung angeordnet ist. Grundsätzlich ist es auch denkbar, dass die Sperrvorrichtung dazu vorgesehen ist, die Anbindungseinheit der Babyschale 10 zu entsperren, wenn der Tragebügel 42 in seiner Tragestellung und das Beinauflageelement 58 in seiner hochgeklappten Stellung angeordnet ist. Die Sperrvorrichtung ist dabei insbesondere als eine Geometrie ausgebildet, die dazu vorgesehen ist, ein korrektes Einsetzen der Babyschale 10 in das Grundmodul 12 zu verhindern, wenn der Tragebügel 42 aus seiner Tragestellung herausgeschwenkt ist und/oder das Beinauflageelement 58 aus seiner Anbindungskonfiguration herausgeschwenkt ist. Eine Geometrie, die zur Verhinderung einer Kopplung vorgesehen ist, kann insbesondere durch seitliche Ausnehmungen in dem Grundmodul 12 ausgebildet sein, in die der Tragebügel 42 nur eingeführt werden kann, wenn er in seiner Trageposition angeordnet ist. Eine weitere Geometrie, die zur Verhinderung einer Kopplung vorgesehen ist, kann insbesondere durch ein oder mehrere Anschlagelemente ausgebildet sein, die an dem Beinauflageelement 58 anschlagen, wenn dieses bei einer versuchten Kopplung der Babyschale 10 mit dem Grundmodul 12 aus seiner Anbindungskonfiguration herausbewegt ist. Nur wenn das Beinauflageelement 58 in seiner Anbindungskonfiguration ausgerichtet ist, kontaktieren die Anschlagelemente die Beinauflage bei einem Koppelversuch nicht, wodurch sich die Babyschale 10 mit dem Grundmodul 12 koppeln lässt.

### Bezugszeichen

- 10: Babyschale
- 12: Grundmodul
- 14: Grundkörper
- 16: Abstützfuß
- 18: Formschlusselement
- 20: Grundkörper
- 22: Rückenlehnenbereich
- 24: Seitenflügel
- 26: Seitenflügel
- 28: Liegefläche
- 30: Grundkörper
- 32: Lagereinheit
- 34: Kopfstützelement
- 36: Mittelbereich
- 38: Seitenbereich
- 40: Seitenbereich
- 42: Tragebügel
- 44: Seitenteil
- 46: Seitenteil
- 48: Drehlager
- 50: Verbindungsteil
- 52: Haltebereich
- 54: Außenseite
- 56: Führungskontur
- 58: Beinauflageelement
- 60: Lagereinheit
- 62: Kindersitzwinkel
- 64: Kinderliegewinkel
- 66: Kopfbereich
- 68: Stufe
- 70: Reducer
- 72: Kleinkindsitzwinkel
- 74: Kleinkindliegewinkel

## Patentansprüche

1. Babyschalenvorrichtung mit einer Babyschale (10), die zur Anbindung in einem Grundmodul (12) vorgesehen ist, zumindest einen zwischen zwei Stellungen verstellbaren Tragebügel (42) aufweist, dass die Babyschale (10) zumindest zwischen einer Anbindungskonfiguration und einer Komfortkonfiguration verstellbar ist und dass die Babyschale (10) zumindest einen Seitenflügel (24, 26) aufweist, der von einer Anbindungskonfiguration in eine Komfortkonfiguration bewegbar ist, **dadurch gekennzeichnet, dass** der verstellbare Tragebügel (42) zumindest in einer Tragestellung den wenigstens einen Seitenflügel (24, 26) in der Anbindungskonfiguration sichert, wobei der Tragebügel (42) mit seinen Innenseiten in seiner Tragestellung an Außenseiten (54) der Seitenflügel (24,26) anliegt.

2. Babyschalenvorrichtung nach Anspruch 1, **dadurch gekennzeichnet, dass** der wenigstens eine Seitenflügel (24, 26) der Babyschale (10) schwenkbar angeordnet ist.

3. Babyschalenvorrichtung zumindest nach Anspruch 1, **dadurch gekennzeichnet, dass** der Tragebügel (42) in einer Freigabestellung dazu vorgesehen ist, zumindest den wenigstens einen Seitenflügel (24, 26) freizugeben.

4. Babyschalenvorrichtung zumindest nach Anspruch 1, **dadurch gekennzeichnet, dass** die Babyschale (10) wenigstens ein bewegliches Kopfstützelement (34) aufweist, das automatisch zusammen mit dem zumindest einen Seitenflügel (24, 26) verstellbar ist.

5. Babyschalenvorrichtung nach Anspruch 4, **dadurch gekennzeichnet, dass** das bewegliche Kopfstützelement (34) und/oder der wenigstens eine Seitenflügel (24, 26) zur automatischen Verstellung federbelastet ausgebildet sind/ist.

6. Babyschalenvorrichtung nach Anspruch 4, **dadurch gekennzeichnet, dass** der Tragebügel (42) bei einer Verstellung von einer Freigabestellung in eine Tragestellung den wenigstens einen Seitenflügel (24, 26) und das Kopfstützelement (34) in ihre Anbindungskonfigurationen verstellt.

7. Babyschalenvorrichtung nach einem der vorhergehenden Ansprüche, **dadurch gekennzeichnet, dass** die Babyschale (10) in einem Kopfbereich (66) eine nach hinten abgesetzte Stufe (68) aufweist, die von einem Grundkörper (20) der Babyschale (10) ausgebildet ist.

8. Babyschalenvorrichtung nach einem der vorhergehenden Ansprüche, **dadurch gekennzeichnet, dass** die Babyschale (10) wenigstens ein Beinauflageelement (58) aufweist, das in seinem Winkel veränderbar ist.

9. Babyschalenvorrichtung nach Anspruch 8, **dadurch gekennzeichnet, dass** das Beinauflageelement (58) relativ zu einem Rückenlehnenbereich (22) der Babyschale (10) verstellbar ist.

10. Babyschalenvorrichtung nach einem der vorhergehenden Ansprüche, **dadurch gekennzeichnet, dass** die Babyschale (10) einen Kindersitzwinkel (62) von zumindest 109 Grad aufweist.

11. Babyschalenvorrichtung nach einem der vorhergehenden Ansprüche, **dadurch gekennzeichnet, dass** die Babyschale (10) in der Komfortkonfiguration einen Kinderliegewinkel (64) von 140 Grad aufweist.

12. Babyschalenvorrichtung nach einem der vorhergehenden Ansprüche, **gekennzeichnet durch** zumindest einen Reducer (70), der in einem in der Babyschale (10) eingesetzten Zustand einen Kleinkindsitzwinkel (72) von zumindest 129 Grad und einen Kleinkindliegewinkel (74) von 160 Grad aufweist.

## Claims

1. Baby seat device with a baby seat (10), which is intended for connection to a basic module (12), comprises at least one carrying handle (42), which may be adjusted between two positions, **characterized in that** the baby seat (10) may be adjusted at least between a connection configuration and a comfort configuration, and **in that** the baby seat (10) comprises at least one lateral wing (24, 26), which may be moved from a connection configuration into a comfort configuration, **characterized in that** the adjustable carrying handle (42), at least in one carrying position, secures at least one lateral wing (24, 26) in the connection configuration, wherein the carrying handle (42) rests with its inner surfaces in its carrying position against the exterior surfaces (54) of the lateral wing (24, 26).

2. Baby seat device according to claim 1, **characterized in that** at least one lateral wing (24, 26) of said baby seat (10) is pivotally arranged.

3. Baby seat device at least according to claim 1, **characterized in that** said carrying handle (42) is provided in a release position for releasing at least one lateral wing (24, 26).

4. Baby seat device at least according to claim 1, **characterized in that** said baby seat (10) comprises at least one movable head supporting element (34), which is automatically adjustable together with at least one lateral wing (24, 26).

5. Baby seat device according to claim 4, **characterized in that** said movable head supporting element (34) and/or at least one lateral wing (24, 26) are/is springloaded for automatic adjustment.

6. Baby seat device according to claim 4, **characterized in that** said carrying handle (42), upon displacement from a release position to a carrying pitch, displaces at least one lateral wing (24, 26) and said head supporting element (34) into their attachment configurations.

7. Baby seat device according to one of the preceding claims, **characterized in that** the baby seat (10) comprises, in a head region (66), a step (68) which is offset toward the rear and is formed by a base frame (20) of the baby seat (10).

8. Baby seat device according to one of the preceding claims, **characterized in that** said baby seat (10) comprises at least one leg supporting element (58) the angle of which is variable.

9. Baby seat device according to claim 8, **characterized in that** said leg supporting element (58) is adjustable relative to a back rest section (22) of said baby seat (10).

10. Baby seat device according to one of the preceding claims, **characterized in that** said baby seat (10) comprises a child seat angle (62) of at least 109 degrees.

11. Baby seat device according to one of the preceding claims, **characterized in that** said baby seat (10) in said comfort configuration comprises a child reclining angle (64) of 140 degrees.

12. Baby seat device according to one of the preceding claims, **characterized by** at least one reducer (70) which, in a state in which it is inserted in the baby seat (10), has an child seat angle (72) of at least 129 degrees and an child reclining angle (74) of 160 degrees.

## Revendications

1. Dispositif de siège pour bébé muni d'un siège pour bébé (10) destiné à être relié à un module de base (12), comprenant au moins une poignée de transport (42) qui peut être réglée entre deux positions, **caractérisé en ce que** le siège pour bébé (10) peut être réglé au moins entre une configuration de liaison et une configuration de confort, et **en ce que** le siège pour bébé (10) comprend au moins une aile latérale (24, 26) qui peut être déplacée d'une configuration de liaison à une configuration de confort, **caractérisé en ce que** la poignée de transport réglable (42), au moins dans une position de transport, fixe au moins une aile latérale (24, 26) dans la configuration de liaison, dans laquelle la poignée de transport (42) repose par ses surfaces intérieures dans sa position de transport contre les surfaces extérieures (54) de l'aile latérale (24, 26).

2. Dispositif de siège pour bébé selon la revendication 1, **caractérisé en ce qu'**au moins une aile latérale (24, 26) dudit siège pour bébé (10) est agencée de manière pivotante.

3. Dispositif de siège pour bébé selon au moins la revendication 1, **caractérisé en ce que** ladite poignée de transport (42) est prévue dans une position de dégagement pour dégager au moins une aile latérale (24, 26).

4. Dispositif de siège pour bébé selon au moins la revendication 1, **caractérisé en ce que** ledit siège pour bébé (10) comprend au moins un élément de soutien de tête mobile (34), qui est automatiquement réglable conjointement avec au moins une aile latérale (24, 26).

5. Dispositif de siège pour bébé selon la revendication 4, **caractérisé en ce que** ledit élément de soutien de tête mobile (34) et/ou au moins une aile latérale (24, 26) est/sont sollicités par ressort pour un réglage automatique.

6. Dispositif de siège pour bébé selon la revendication 4, **caractérisé en ce que** ladite poignée de transport (42), lors du déplacement d'une position de dégagement à un pas de transport, déplace au moins une aile latérale (24, 26) et ledit élément de soutien de tête (34) dans leurs configurations de fixation.

7. Dispositif de siège pour bébé selon l'une quelconque des revendications précédentes, **caractérisé en ce que** le siège pour bébé (10) comprend, dans une zone de tête (66), un gradin (68) qui est décalé vers l'arrière et qui est formé par un cadre de base (20) du siège pour bébé (10).

8. Dispositif de siège pour bébé selon l'une quelconque des revendications précédentes, **caractérisé en ce que** ledit siège pour bébé (10) comprend au moins un élément de support pour les jambes (58) dont l'angle est variable.

9. Dispositif de siège pour bébé selon la revendication 8, **caractérisé en ce que** ledit élément de support pour les jambes (58) est réglable par rapport à une section de dossier (22) dudit siège pour bébé (10).

10. Dispositif de siège pour bébé selon l'une quelconque des revendications précédentes, **caractérisé en ce que** ledit siège pour bébé (10) comprend un angle de siège pour enfant (62) d'au moins 109 degrés.

11. Dispositif de siège pour bébé selon l'une quelconque des revendications précédentes, **caractérisé en ce que** ledit siège pour bébé (10) dans ladite configuration de confort comprend un angle d'inclinaison pour enfant (64) de 140 degrés.

12. Dispositif de siège pour bébé selon l'une quelconque des revendications précédentes, **caractérisé par** au moins un réducteur (70) qui, dans un état dans lequel il est inséré dans le siège pour bébé (10), présente un angle de siège pour enfant (72) d'au moins 129 degrés et un angle d'inclinaison pour enfant (74) de 160 degrés.
